# EUROPÄISCHE PATENTSCHRIFT

(11) **EP 0 349 948 B1**
(45) Veröffentlichungstag und Bekanntmachung des Hinweises auf die Patenterteilung: **29.12.1993**
(21) Anmeldenummer: 89112074.3
(22) Anmeldetag: 01.07.1989
(51) Int. Cl.: F16M 11/14

(54) **Stativkopf**
Support head
Tête de support

(30) Priorität: 06.07.1988 CH 2565/88
(43) Veröffentlichungstag der Anmeldung: 10.01.1990
(73) Patentinhaber: Vogt, Philippe, CH-8038 Zürich (CH)
(72) Erfinder: Vogt, Philippe, CH-8038 Zürich (CH)
(74) Vertreter: Legland, Brynjulv

(56) Entgegenhaltungen:
- DE-A- 2 203 196
- FR-A- 1 112 908
- FR-A- 2 346 594
- FR-A- 2 606 472

## Beschreibung

Die vorliegende Erfindung betrifft einen Stativkopf zur Aufnahme eines optischen Gerätes nach dem Oberbegriff des Anspruches 1.

Ein Stativkopf dieser Art ist aus der DE-A 22 03 196 bekannt. Der Stativkopf enthält ein zylinderförmiges Gehäuse, das an einem Ende eine Anschlusseinrichtung für ein Stativ aufweist, einen ebensymmetrischen Körper, der im Gehäuse beweglich angeordnet ist, und eine Feststelleinrichtung, um den Körper festzuklemmen, wobei die Feststelleinrichtung mindestens zwei mit jeweils einer Schrägfläche versehene Organe, die auf einer ortsfesten Unterlage abgestützt, mit den Schrägflächen aufeinanderliegend und quer zueinander angeordnet sind, um das eine Organ zur Erzielung der Klemmwirkung gegen den Körper zu verschieben, und eine Stelleinrichtung aufweist, die mit dem anderen Organ in Eingriff steht, um das andere Organ quer zu verschieben.

Die Nachteile dieses Stativkopfes sind im wesentlichen darin zu sehen, dass insbesondere bei Grossformatkameras die erforderliche Klemmwirkung bei geneigtem Bild- oder Objektivträger nicht auf die Kugel aufbringbar ist, dass das Gehäuse im Bereich der Klemmschraube verformt wird, und dass das optische Gerät nicht vibrationsfrei montiert werden kann.

Die der Erfindung zu Grunde liegende Aufgabe besteht darin, einen Stativkopf zu schaffen, bei dem die genannten Nachteile nicht auftreten und die Schwenkbewegung mit zunehmendem Schwenkwinkel einer höheren Klemmwirkung bewirkt und die Schwenklage definiert festgelegt wird.

Diese Aufgabe wird erfindungsgemäss durch die kennzeichnenden Merkmale des Patentanspruches 1 gelöst.

Die mit der Erfindung erreichbaren Vorteile sind im wesentlichen darin zu sehen, dass durch die in Richtung des Gehäusekörpers wirkende Klemmkraft eine zuverlässige Klemmeinwirkung erzielt wird und die bei Gebrauch des Gerätes eventuell auftretenden Vibrationen wirkungsvoll gedämpft werden und dass durch getrennte definierte Schwenkbewegungen das optische Gerät leichter einstellbar ist und durch die Feststelleinrichtung schwingungsfrei gehalten wird.

Bei einer bevorzugten Ausführungsform der Erfindung sind ein erster und zweiter ebenensymmetrischer Körper vorgesehen, der erste und zweite Körper sind rechtwinklig zueinander und quer zur Gehäuseachse schwenkbar angeordnet, wobei mindestens ein Körper einen Anschlussabschnitt für das optische Gerät aufweist, und dem zweiten Körper eine weitere Feststelleinrichtung zugeordnet ist.

Die dadurch erzielbaren Vorteile sind darin zu sehen, dass durch getrennte definierte Schwenkbewegungen das optische Gerät leicher einstellbar ist und durch die Feststelleinrichtungen schwingungsfrei gehalten wird.

Bei einer weiteren Ausführungsform weist der Körper zwei identisch ausgebildete Abschnitte auf, die auf einer Linie liegend ausgebildet sind, wobei zwei Gehäuse vorgesehen sind, die jeweils auf einem Abschnitt und um rechtwinklig zueinander angeordnete Achsen schwenkbar angeordnet sind, und wobei jedem Abschnitt eine Feststelleinrichtung zugeordnet ist.

Diese Ausführungsform hat den Vorteil, dass sie einfach aufgebaut ist und insbesondere zur schwingungsfreien Montage von optischen Geräten mit geringem Eigengewicht geeignet ist.

Im folgenden wird die Erfindung anhand der beiliegenden Zeichnungen näher erläutert. Es zeigen:
Fig. 1 einen Schnitt durch eine bevorzugte Ausführungsform eines erfindungsgemässen Stativkopfes,
Fig. 2 einen Schnitt durch eine andere Ausführungsform des erfindungsgemässen Stativkopfes,
Fig. 3 eine modifizierte Ausführungsform der Feststelleinrichtung und
Fig. 4 eine schematische Darstellung eines verschwenkten Körpers.

Der Stativkopf enthält ein zylinderförmiges Gehäuse 1 mit einer Anschlusseinrichtung 2 für ein Statiy, die an einem Ende des Gehäuses montiert ist, einen ersten Körper 3 und einen zweiten Körper 4 mit einem Anschlussabschnitt 5 für ein optisches Gerät, die im Gehäuse schwenkbar montiert sind, und eine erste und zweite Feststelleinrichtung 6, 7, die dem ersten bzw. zweiten Körper 3, 4 zugeordnet sind.

Am anderen Ende des Gehäuses ist ein Lagerschnitt 8 für den ersten Körper 3 ausgebildet. Der erste Körper 3 ist um eine quer zur Gehäuseachse 9 liegende Hohlwelle 10 schwenkbar montiert. Im ersten Körper 3 ist eine zylindrische Ausnehmung 11 und ein Lagerabschnitt 12 für den zweiten Körper 4 ausgebildet. Der zweite Körper 4 ist mit einem Schlitz 13 versehen und im ersten Körper 3 so angeordnet, dass er quer zur Hohlwelle 10 schwenkbar und entlang der Hohlwelle 10 geführt ist. Am freien Ende des Anschlussabschnittes 5 ist ein Kamerateller 14 angeordnet. Ferner ist im Anschlussabschnitts eine Bohrung 15 für einen Gewindebolzen (nicht dargestellt) zur Befestigung des optischen Gerätes vorgesehen. Der erste und zweite Körper 3, 4 sind rotationssymmetrische Körper und in Ruhestellung so angeordnet, dass ihre Rotationsachsen zusammenfallen.

Die Feststelleinrichtung 6 für den ersten Körper 3 weist einen ringförmigen Klemmteil 16, der mit der Mantelfläche an der Innenseite des Gehäuses 1 geführt ist, einen Stützring 17, der mit einer Stirnseite auf der Anschlusseinrichtung 2 aufliegt und an der anderen Stirnseite mit einer radial nach aussen ansteigenden Schrägfläche versehen ist, zwei Schieberteile 18, die einerseits am Klemmteil 16 anliegen und andererseits mit einer Schrägfläche versehen sind, und eine Stelleinrichtung 19 auf, die mit den Schieberteilen 18 in Eingriff steht. Die Schrägflächen am Stützring 17 und an den Schieberteilen 18 haben entgegengesetzte Neigungen mit gleichem Neigungswinkel. Der Stützring 17 und die Schieberteile 18 sind mit ihrem Schrägflächen aufeinanderliegend angeordnet, so dass eine radiale Verschiebung der Schieberteile 18 eine Verschiebung des Klemmteiles 16 in Richtung zum ersten Körper 3 bewirkt. Diese radiale Verschiebung der Schieberteile 18 wird durch die Stelleinrichtung 19 bewirkt, die aus einer Spindel 20 und einem Drehknopf 21 besteht. Hierzu sind in den Schieberteilen 18 jeweils ein Gewindeloch vorgesehen und an der Spindel 20 sind Gewindeabschnitte mit linksgängigem oder rechtsgängigem Gewinde 22, 23 ausgebildet, auf denen die Schieberteile 18 aufgeschraubt sind. Die Spindel 20 ist einseitig aus dem Gehäuse 1 herausgeführt und an diesem Ende mit einem Drehknopf 21 versehen. Die Spindel 20 ist in einem Langloch 24 geführt, dessen Mittellinie parallel zur Gehäuseachse 9 verläuft, um die Verschiebung der Spindel 20 beim Feststellen des ersten Körpers 3 zu ermöglichen.

Die Feststelleinrichtung 7 für den zweiten Körper 4 ist analog zur Feststelleinrichtung 6 für den ersten Körper 3 ausgestaltet, unterscheidet sich aber in der Ausführung der Stelleinrichtung. Diese Feststelleinrichtung enthält einen ringförmigen Klemmteil 25, der mit Mantelfläche an der Innenseite der Ausnehmung 11 geführt ist, einen Stützring 26, der an einer Stirnseite mit einer Schrägfläche versehen ist und am Umfang in der Ausnehmung 11 im ersten Körper 3 so befestigt ist, dass die Schrägfläche innerhalb der Ausnehmung liegt und radial nach aussen ansteigt, zwei Schieberteile 27, die einerseits am Klemmteil 25 anliegen und andererseits mit einer Schrägfläche versehen sind, und eine Stelleinrichtung 28, die mit den Schieberteilen 72 in Eingriff steht. Die Anordnung des Klemmteiles 25, des Stützringes 26 und der Schieberteile 27 zueinander ist gleich wie bei der Feststelleinrichtung 6 für den ersten Körper 3, so dass auf eine Beschreibung verzichtet werden kann.

Die Stelleinrichtung 28 enthält eine Spindel 29, die einseitig aus dem Gehäuse 1 herausgeführt ist, einen Drehknopf 30, der an der Spindel befestigt ist, und zwei Schieberelemente 31, die mit den Schieberteile 27 in Verbindung stehen. Die Schieberelemente 31 haben eine Gewindehülse 32 mit Innengewinde und einen Steg 33, der radial von der Gewindehülse absteht. Eine Gewindehülse ist mit einem rechtsgängigen Gewinde und die andere Gewindehülse mit einem linksgängigen Innengewinde versehen. Die Spindel 29 ist mit einem rechtsgängigen und einem linksgängigen Gewindeabschnitt 34, 35 versehen, auf denen Gewindeabschnitten die Schieberelemente 32 aufgeschraubt sind, wobei deren Gewindehülsen 32 am Umfang in der Hohlwelle 10 geführt sind. Die Hohlwelle 10 ist ferner mit einem Schlitz 36 versehen, durch welchen die Stege 33 hindurchragen und der ein Verdrehen der Schieberelemente 31 beim Drehen der Spindel 29 verhindert. Dadurch werden die Schieberelemente 31 aufeinander bzw. voneinander weg bewegt, wenn die Spindel gedreht wird.

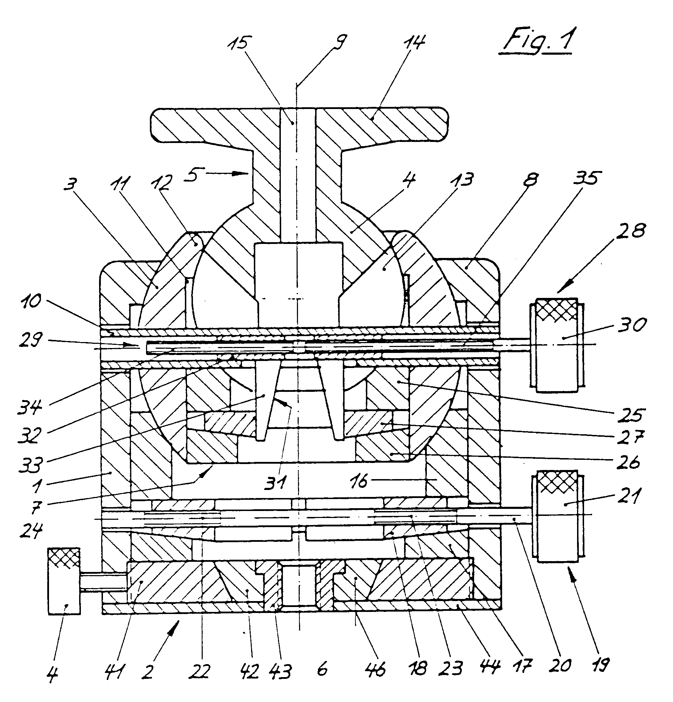

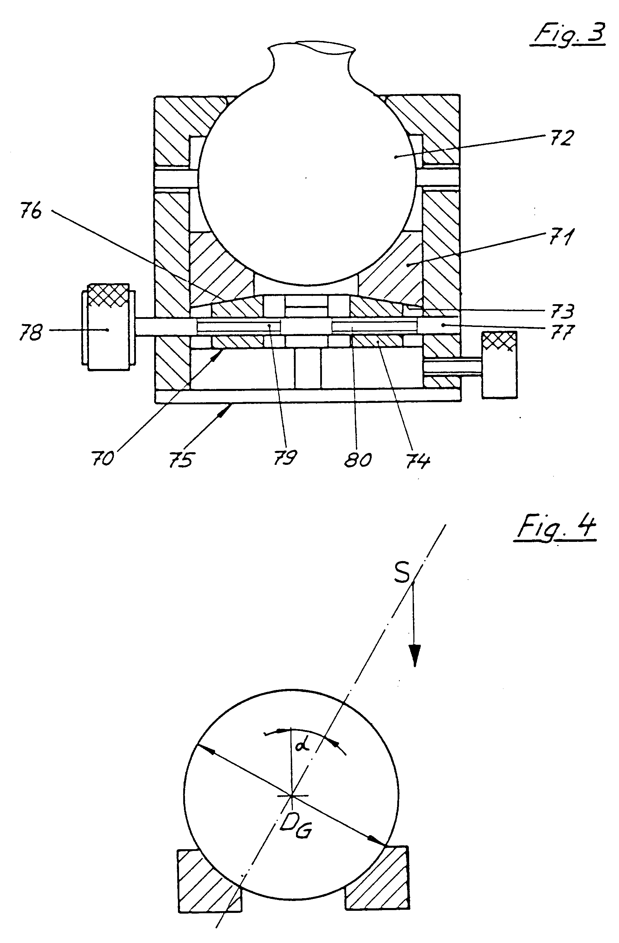

Die als Rotationskörper ausgebildeten Körper stellen ein abgeplattetes Rotationsellipsoid dar, d.h. haben etwa die Form der Erdkugel, die im Bereich der der Aequatorlinie den Durchmesser D_{G} aufweist (Fig. 4). Wie Fig. 1 zeigt, hat der Klemmteil 6 eine Ausnehmung, die dem flacheren Abschnitt des Körpers 3 angepasst ist. Der erste Körper 3 ist im Gehäuse 1 in einer Grundstellung so angeordnet, dass sein Rotationsachse mit der Gehäuseachse 9 zusammenfällt und um die Aequatorlinie kreuzende Hohlwelle 10 schwenkbar ist. Durch die Ausbildung und Anordnung des ersten Körpers 3 wird erreicht, dass die Klemmwirkung mit zunehmendem Schwenkwinkel durch den sich vergrössernden Umfang des am Klemmteil 16 anliegenden ersten Körpers 3 verstärkt wird. Damit wird einerseits die Schwenkbewegung gedämpft und andererseits verhindert, dass bei einem schweren optischen Gerät eine ungewollte Schwenkbewegung auftritt.

Der zweite Körper 4 ist ebenfalls ein Rotationskörper und hat bis auf den Ansatz 5 die gleiche Kontur. Dieser zweite Körper 4 ist im ersten Körper 3 in einer Grundstellung so angeordnet, dass seine Rotationsachse mit der Gehäuseachse 9 zusammenfällt. Die Funktionsweise des zweiten Körpers 4 ist analog zu der des ersten Körpers 3 und wird daher nicht beschrieben. Der erste und zweite Körper 3, 4 können an den Oberflächenbereichen, die mit den Lagerabschnitten 8 und 12 in Kontakt stehen, mit einer Beschichtung (nicht dargestellt) versehen sein. Es ist aber auch möglich, einen Lagerring (nicht dargestellt) aus geeignetem Material zu verwenden.

Die Anschlusseinrichtung 2 für das Stativ (nicht dargestellt) enthält einen geschlitzten Ring 41 mit einer konischen Bohrung im Zentrum und einem Aussengewinde am Umfang. Im Gehäuse 1 ist ein Innengewindeabschnitt ausgebildet, in den der Ring 41 eingeschraubt ist. Die Anschlusseinrichtung 2 enthält ferner einen kegelstumpfförmigen Einsatz 42, dessen Neigung der konischen Bohrung angepasst ist, und der im Zentrum mit einer Gewindehülse 43 mit Innengewinde aufweist, und einen Deckel 44, der mittels Senkkopfschrauben 46 am Einsatz 42 befestigt ist. Die Anschlusseinrichtung 2 wird mit dem Ring 41 in das Gehäuse 1 geschraubt, wobei der Einsatz 42 und der Deckel 44 am Ring 41 drehbar sind und somit der Panoramaschwenkung dient.

Zum Arretieren der Panoramaschwenkung ist eine Stellschraube 48 vorgesehen, die in eine Gewindebohrung eingeschraubt ist, die im Bereich des Ringes 41 im Gehäuse 1 vorgesehen ist. Mit dieser Stellschraube 47 kann der Ring 41 gegen den Einsatz 42 gedrückt werden.

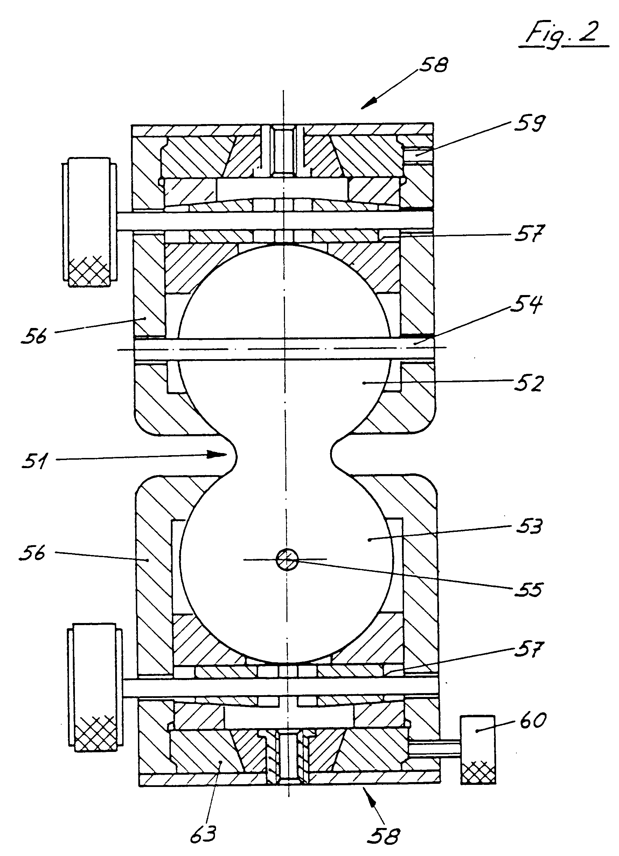

Die in Fig. 2 dargestellte Ausführungsform enthält einen Körper 51, der ein Rotationskörper ist. Der Körper 51 hat zwei Abschnitte 52 und 53, die ein abgeplattetes Rotationsellipsoid darstellen, d.h. es hat etwa die Form der Erdkugel, die im Bereich der Aequatorlinie den grössten Durchmesser aufweist. In jedem Abschnitt 52, 53 ist eine Achse 54 und 55 befestigt, die rechtwinklig zueinander und quer zur Rotationsachse angeordnet sind. Die Achsen stehen beidseitig der Abschnitte 52 und 54 vor. Jedem Abschnitt ist ein Gehäuse 56 und eine Feststelleinrichtung 57 zugeordnet, deren Ausführungsform jenen im Zusammenhang mit Fig. 1 beschriebenen gleicht. Jedes Gehäuse 56 weist eine Anschlusseinrichtung 58 auf, die gleich wie die im Zusammenhang mit Fig. 1 beschriebene ist.

Bei der Ausführungsform nach Fig. 2 wird eine Anschlusseinrichtung 58 mit einer Stiftschraube 59 gegen Verdrehen gesichert und zum Anschluss des optischen Gerätes verwendet, während die andere Anschlusseinrichtung 58 mit dem Stativ verbunden wird und der Panoramaschwenkung dient. Hierzu ist erfindungsgemäss eine Klemmschraube 60 vorgesehen. Zur Erzielung der Klemmwirkung ist der Ring 61 geschlitzt, so dass der Ring 61 durch die Klemmschraube 60 zusammengedrückt werden kann. Bei der Anschlusseinrichtung 58 für das optische Gerät erfolgt die Klemmung durch die Stiftschraube 59.

Die Abschnitte 52 und 53 des Körpers 3 sind mit zylinderförmigen Ausnehmungen versehen, um das Körpergewicht zu reduzieren.

Anstelle des einstückigen Körpers können zwei den Abschnitten 52 und 53 entsprechend ausgebildete Körper vorgesehen werden, die miteinander drehbar verbunden sind und durch ein Abstandsstück getrennt sind.

Wie die Fig. 3 zeigt, kann die Feststelleinrichtung 70 modifiziert werden, indem der ringförmige Klemmteil 71 an einer Stirnseite, die dem Körper 72 angepasste Ausnehmung und an der anderen Stirnseite eine Schrägfläche 73 aufweist und die Schieberteile 74 an der der Anschlusseinrichtung 75 aufliegenden Seite abgewandten Seite die Schrägfläche 76 aufweist. In diesem Fall wird durch die Verschiebung der Schieberteile 74 der Klemmteil 71 unmittelbar in Richtung zum Körper 72 verschoben und die Klemmwirkung erzielt. Diese Verschiebung der Schieberteile 74 erfolgt durch eine Stelleinrichtung 77 mit einer Spindel 78 und einem Drehknopf 79. Die Spindel 77 weist einen rechts- und linksgängigen Gewindeabschnitt 80, 81 auf und zwar analog zur Feststelleinrichtung für den ersten Körper in Fig. 1.

Anhand der Fig. 4 wird die Wirkung der Körperform erläutert. Wie bereits erwähnt, hat der Körper die Form einer Erdkugel, die im Bereich der Aequatorlinie den grössten Durchmesser D_{G} hat. Wird ein Körper oder ein Gehäuse um den Winkel verschwenkt, wird ein Teil des erweiterten Abschnittes des Körpers in die Ausnehmung im Klemmteil eine grössere Klemmwirkung in diesem Bereich bewirken. Dadurch wird eine grössere Dämpfung erzielt, so dass der Schwerpunkt des am Körper befestigten Apparates oder Gerätes durch die Schwenkung ausserhalb des Kugelumfanges liegen kann.

## Patentansprüche

1. Stativkopf zur Aufnahme eines optischen Gerätes mit einem zylinderförmigen Gehäuse (1), das an einem Ende eine Anschlusseinrichtung (2) für ein Stativ aufweist, mit einem ebenensymmetrischen Gelenkkörper (3, 4 ; 53, 72), der im Gehäuse beweglich angeordnet ist, und mit einer Feststelleinrichtung (6, 7, 57, 70) um den Gelenkkörper (3, 4; 53, 72) festzuklemmen, wobei die Feststelleinrichtung (6, 7, 57, 70) mindestens zwei mit jeweils einer Schrägfläche versehene Organe (17, 18, 26, 27 ; 71, 73) aufweist, die auf einer ortsfesten Unterlage (2, 58, 75) abgestützt, mit den Schrägflächen aufeinanderliegened und zueinander verschiebbar angeordnet sind um das eine Organ (17, 26, 71) zur Erzielung der Klemmwirkung gegen den Gelenkkörper (3, 4; 53, 72) zu verschieben, und eine Stelleinrichtung (19) aufweist, die mit dem anderen Organ (18, 27) im Eingriff steht, um das andere Organ (18, 27) zum erstgenannten Organ (17, 26, 71) quer zu verschieben, dadurch gekennzeichnet, dass ein zweiter ebenensymmetrischer Körper (4) vorgesehen ist oder der Körper (51) aus zwei ebenensymmetrischen Teilen (52, 53, 72) besteht, dass der erste und zweite Körper(3,4), bzw. der erste und zweite Teil (52, 53, 72) des Körpers (51), um rechtwinklig zueinander stehende Achsen (10, 54, 55) und quer zur Gehäuseachse (9) schwenkbar angeordnet sind, wobei mindestens ein Körper (4) bzw. Teil des Körpers, einen Anschlussabschnitt (5) für das optische Gerät aufweist und dass dem zweiten Körper (4) bzw. dem zweiten Teil (52) des Körpers (51) eine weitere Feststelleinrichtung (7, 57) zugeordnet ist.

2. Stativkopf nach Anspruch 1, dadurch gekennzeichnet, dass mindestens ein Körper (3,4) als Kugel ausgebildet ist.

3. Stativkopf nach Anspruch 1 oder 2, dadurch gekennzeichnet, dass mindestens ein Körper (3,4) eine Kontur hat, derart, dass abhängig von der Schwenkbewegung die Klemmwirkung zu- bzw.abnimmt.

4. Stativkopf nach einem der Ansprüche 1 bis 3 dadurch gekennzeichnet, dass der erste Körper (3) im Gehäuse (1) und der zweite Körper (4) im ersten Körper (3) angeordnet ist, dass die dem ersten Körper (3) zugeordnete Feststelleinrichtung im Gehäuse (1) und die dem zweiten Körper (4) zugeordnete Feststelleinrichtung (7) im ersten Körper (3) montiert ist, dass das eine Organ (16, 25, 71) als ringförmiger Klemmteil, der an der Mantelfläche geführt ist, und das andere Organ (18, 27, 74) als zweiteiliger Schieberteil ausgebildet sind, die diametral zueinander angeordnet und mit der Stelleinrichtung in Eingriff stehen, dass die Stelleinrichtung (19, 77) eine Gewindespindel (20,77) und einen Drehknopf (21, 78) aufweist, und dass die Schieberteile (18, 74) ein Gewindeloch mit einem Links-bzw. Rechtsgewinde aufweisen, um die Schieberteile (18, 74) im gegenläufigen Sinne zu verschieben.

5. Stativkopf nach einem der Ansprüche 1 bis 4 dadurch gekennzeichnet, dass ein ringförmiger Klemmteil (16, 25) vorgesehen ist, der an der Mantelfläche geführt ist, dass das eine Organ (17, 26) als Stützring ausgebildet ist, der ortsfest bezüglich dem anderen Organ (18, 27) angeordnet ist, dass das andere Organ (18, 27) als zweiteiliger Schieberteil ausgebildet ist, die diametral zueinander zwischen dem Klemmteil (18, 26) angeordnet sind und mit der Stelleinrichtung (19, 28) in Eingriff stehen und dass der Klemmteil (17, 25, 71) an einer Stirnseite eine Ausnehmung, die einem Abschnitt des Körpers (3, 51, 72) angepasst ist, und auf der anderen Stirnseite die Schrägfläche aufweist und dass die Schieberteile (17, 27, 74) keilförmig ausgebildet sind und zwei aneinandergrenzende rechtwinklige Flächen und eine Schrägfläche aufweisen.

6. Stativkopf nach einem der Ansprüche 1 bis 5 dadurch gekennzeichnet, dass die dem zweiten Körper (4) zugeordnete Feststelleinrichtung (4) eine Stelleinrichtung (28) aufweist, die eine Spindel (29) mit gegenläufigen Gewindeabschnitten (34, 35), die in der Hohlwelle (10) angeordnet ist, einen Drehknopf (30), der an einem Ende der Spindel (29) befestigt ist, und zwei Schieberelemente (31) enthält, die auf die Spindel (29) aufgeschraubt sind, um zur Erzielung der Klemmwirkung die Schieberelemente (31) und die mit diesen jeweils verbundenen Schieberteile (27) gegeneinander und bezüglich dem Klemmteil (16) zu verschieben, wenn die Spindel (29) gedreht wird, wobei jedes Schieberelement (31) eine Gewindehülse (32) mit Innengewinde und einen Steg (33) aufweist, der radial von der Gewindehülse (32) absteht und mit dem Schieberteil (27) in Verbindung steht und dass der zweite Körper (4) einen Anschlussabschnitt (14, 15) für das optische Gerät aufweist.

7. Stativkopf nach Anspruch 1, dadurch gekennzeichnet, dass der Körper (51) zwei identisch ausgebildete Abschnitte (52,53) aufweist, die auf einer Linie liegend ausgebildet sind, dass zwei Gehäuse (56) vorgesehen sind, die jeweils auf einem Abschnitt und um rechtwinklig zueinander schwenkbar angeordnete Achsen angeordnet sind, und dass jedem Abschnitt (53, 53) eine Festelleinrichtung (57) zugeordnet ist.

8. Stativkopf nach Anspruch 7, dadurch gekennzeichnet, dass die Abschnitte (52, 53) des Körpers (51) kugelförmig ausgebildet sind.

9. Stativkopf nach Anspruch 7, dadurch gekennzeichnet, dass mindestens ein Abschnitt (52, 53) eine Kontur hat, derart, dass abhängig von der Schwenkbewegung des zugeordneten Gehäuses (56) die Klemmwirkung zu-bzw. abnimmt.

## Claims

1. Support head for receiving an optical apparatus with a cylindric housing (1) which at one end is provided with a connectinmg means for a support, with an even-symmetric bodylink (3,4;53,72), movable within the housing, and with a locking device (6,7,57,70) for clamping the body link (3,4;53,72), which device (6,7,57,70) comprises at least two parts (17,18,26,27;71,72), each of which being provided with an inclined plane and being supported on a stationary base plate (2, 58, 75), the inclined planes lying against and being slideable relativ to each other, in order to slide one of the parts (17, 26, 71), to obtain a clamping effect against the body link (3,4;53,72), and with an adjusting device (19), that contacts the other part (18,27) in order to move this part transverse to the first part (17,26,71)**, cha****racterized** **in that** a second even-symmetric body (4) is provided, or that the body (51) consists of two even-symmetric bodies (52,53,72), that the first and second body (3,4), or the first and second part (52,53,72) of the body (53), respectively, are swingable on shafts (120,54,55) defining an right angle transverse to the axis (9) of the housing, that at least one body (4), or part thereof, respectively, includes a connecting section (5) for the optical device, and that a further locking device (7,57) is assigned to the second body (4), or the second portion (52) of the body (51), respectively.

2. Support head according to claim 1, characterized in that at least one body (3,4) has the shape of a ball.

3. Support head according to claim 1 or 2, characterized in that at least one body (3,4) has such a contour, that the clamping effect increases or decreases depending on the rotating motion.

4. Support head according to one of the claims 1 to 3, characterized in that the first body (3) is placed in the housing (1) and the second body (4) in the first body (3), that the locking device in the housing (1) assigned to the first body (3) and the locking device (7) assigned to the second body (4) are mounted in the first body (3), that one part (16,25,71) is a ring-shaped locking portion on the generated surface and the other part (18,27,74) is a two-part slider portion, which are arranged diametrical to each other and are contacting the adjusting device (19), which includes a threaded spindle (20,77) and a rotary knob (21,78), and that the slider parts (18,74) comprise a threaded bore with left- and right-hand thread, respectively, in order to move the slider parts (18,74) in opposite senses.

5. Support head according to one of the claims 1 to 4, characterized in that a ring-shaped locking portion (16,25) is provided, which is conveyed along the generated surface, that one (17,26) of the parts is shaped as a support ring, that is stationary with regard to the other part (18,27), which is designed as a two-part slider portion, placed diametrically to each other between the clamping part (18,26) and is contacting the adjusting device (19,28), that the clamping part (17,25,71) has a recess on a front side, which recess matches a section of the body (3,51,72), and on the other front side has the inclined plane, and that the slider parts (17,27,74) are wedge-shaped and comprise two adjacent right-angle surfaces and an inclined plane.

6. Support head according to one of the claims 1 to 5, characterized in that the locking device (4) assigned to the second body (4) has an adjustment device (28), that comprises a spindle (29) with oppositely oriented thread portions (34, 35) placed in the hollow shaft (10), a rotating knob (30), that is fastened to one end of the spindle (29), and two slider elements (31), which are screwed onto the spindle (29), and - in order to create the clamping action - displace the sliding parts (27) toward each other and with regard to the clamping portion (16), when the spindle is rotated, that each slider element (31) comprises a threaded sleeve (32) with internal thread and a bar (33) extending radially from the sleeve (32) and being connected with the slider part (27), and that the second body (4) has a section (14,15) for connection the optical apparatus.

7. Support head according to claim 1, characterized in that the body (51) has two identically shaped sections (52,53) lying on a line, that two housings (56) are provided in one section and being swingable on shafts arranged in a right angle to each other, and that a locking device (57) is assigned to each section (52,53).

8. Support head according to claim 7, characterized in that the sections (52,53) of the body (51) are ball-shaped.

9. Support head according to claim 7, characterized in that at least one section (52,53) has such a contour, that the clamping action increases or decreases, respectively, depending on the swinging movement of the housing (56) assigned thereto.

## Revendications

1. Tête de trépied servant à recevoir un appareil optique avec boîtier (1) cylindrique pourvu à une extrémité d'un dispositif de raccord (2) pour un trépied, pourvue d'un membre articulé (3, 4; 53, 72) présentant un plan de symétrie, disposé de manière mobile dans le boîtier, et pourvue d'un dispositif d'immobilisation (6, 7, 57, 70) pour bloquer le membre articulé (3, 4; 53, 72), le dispositif d'immobilisation (6, 7, 57, 70) étant pourvu au moins de deux organes (17, 18, 26, 27; 71, 73) ayant chacun une surface oblique, qui sont appuyés sur une base fixe (2, 58, 75), reposent l'un sur l'autre par les surfaces obliques et sont arrangés de manière mobile l'un par rapport à l'autre afin de déplacer l'un des organes (17, 26, 71) pour obtenir l'effet de serrage contre le membre articulé (3, 4; 53, 72), et étant pourvu d'un dispositif de réglage (19) qui est en contact avec l'autre organe (18, 27) pour déplacer cet autre organe (18, 27) transversalement à l'organe (17, 26, 71) mentionné en premier lieu,
caractérisée par le fait qu'un deuxième membre (4) présentant un plan de symétrie est prévu, ou que le membre (51) est constitué de deux éléments (52, 53, 72) à plan de symétrie, que le premier membre et le deuxième membre (3, 4), ou bien le premier élément et le deuxième élément (52, 53, 72) du membre (51), sont montés autour d'axes (10, 54, 55) orthogonaux et disposés de manière pivotante transversalement à l'axe (9) du boîtier, un membre (4) au moins, ou un élément du membre, étant pourvu d'une partie (5) servant à l'assemblage de l'appareil optique, et par le fait qu'un autre dispositif d'immobilisation (7, 57) correspond au deuxième membre (4) ou bien au deuxième élément (52) du membre (51).

2. Tête de trépied selon la revendication 1, caractérisée par le fait qu'au moins un membre (3, 4) est conçu comme une sphère.

3. Tête de trépied selon la revendication 1 ou 2, caractérisée par le fait qu'au moins un membre (3, 4) est pourvu d'un contour qui fait que l'effet de serrage augmente ou bien diminue en fonction du mouvement pivotant.

4. Tête de trépied selon l'une des revendications 1 à 3, caractérisée par le fait que le premier membre (3) est logé dans le boîtier (1) et que le deuxième membre (4) est logé dans le premier membre (3), que le dispositif d'immobilisation correspondant au premier membre (3) est monté dans le boîtier (1) et que le dispositif d'immobilisation (7) correspondant au deuxième membre (4) est monté dans le premier membre (3), que l'un des organes (16, 25, 71) est conçu comme un élément de serrage annulaire, qui est guidé par la surface convexe, et que l'autre organe (18, 27, 74) est conçu comme une pièce constituant un curseur en deux parties, qui sont diamétralement opposées et sont en contact avec le dispositif de réglage, que le dispositif de réglage (19, 77) est pourvu d'une broche filetée (20, 77) et d'un bouton tournant (21, 78), et que les pièces (18, 74) constituant le curseur sont pourvues d'un trou taraudé avec un filet à gauche ou bien un filet à droite pour déplacer ces pièces (18, 74) en sens contraire.

5. Tête de trépied selon l'une des revendications 1 à 4, caractérisée par le fait qu'un élément de serrage (16, 25) annulaire, qui est guidé par la surface convexe, est prévu, que l'un des organes (17, 26) est conçu comme une couronne d'appui qui est disposée fixement par rapport à l'autre organe (18, 27), que l'autre organe (18, 27) est conçu comme une pièce constituant un curseur en deux parties, qui sont disposées de manière diamétralement opposée entre l'élément de serrage (16, 25) et sont en contact avec le dispositif de réglage (19, 28), et que l'élément de serrage (16, 25, 71) est pourvu, au niveau d'une face frontale, d'un creux qui est adapté à une section du membre (3, 51, 72) et, sur l'autre face frontale, de la surface oblique, et que les parties (17, 27, 74) constituant le curseur sont conçues sous forme de coins et sont pourvues de deux surfaces orthogonales contiguës et d'une surface oblique.

6. Tête de trépied selon l'une des revendications 1 à 5, caractérisée par le fait que le dispositif d'immobilisation (4) correspondant au deuxième membre (4) est pourvu d'un dispositif de réglage (28) comprenant une broche (29) pourvue de deux segments (34, 35) filetés en sens inverse et située dans l'arbre creux (10), un bouton tournant (30) qui est fixé à une extrémité de la broche (29), et deux éléments (31) de curseur, qui sont vissés sur la broche (29) et servent, pour obtenir l'effet de serrage, à déplacer les éléments (31) de curseur et à déplacer l'une contre l'autre et relativement à l'élément de serrage (16) les pièces (27) constituant le curseur qui sont liées respectivement à ces éléments, lorsque l'on tourne la broche (29), chaque élément (31) de curseur étant pourvu d'une douille taraudée (32) et d'une barrette (33) qui est éloignée radialement de la douille taraudée (32) et est reliée à la pièce (27) constituant le curseur, et par le fait que le deuxième membre (4) est pourvu d'une partie (14, 15) servant à l'assemblage de l'appareil optique.

7. Tête de trépied selon la revendication 1, caractérisée par le fait que le membre (51) est pourvu de deux segments (52, 53) conçus de manière identique, se trouvant sur un axe, que deux boîtiers (56) sont prévus, qui sont disposés chacun sur un segment et autour d'axes orthogonaux montés de manière pivotante, et qu'un dispositif d'immobilisation (57) correspond à chaque segment (52, 53).

8. Tête de trépied selon la revendication 7, caractérisée par le tait que les segments (52, 53) du membre (51) sont conçus sous la forme d'une sphère.

9. Tête de trépied selon la revendication 7, caractérisée par le fait qu'au moins un segment (52, 53) est pourvu d'un contour qui fait que l'effet de serrage augmente ou diminue en fonction du mouvement pivotant du boîtier (56) correspondant.
